(19) Europäisches Patentamt
European Patent Office
Office européen des brevets

(11) **EP 2 717 451 B1**

(12) **EUROPEAN PATENT SPECIFICATION**

(45) Date of publication and mention
of the grant of the patent:
**06.03.2019  Bulletin 2019/10**

(51) Int Cl.:
*H02M 3/335* (2006.01)    *H02M 1/36* (2007.01)

(21) Application number: **13183083.8**

(22) Date of filing: **05.09.2013**

(54) **Resonant DC power supply apparatus and control method thereof**

Resonante Gleichstromversorgungsvorrichtung und Steuerverfahren dafür

Appareil d'alimentation en courant continu resonant et son procédé de commande

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.10.2012  JP 2012222639**

(43) Date of publication of application:
**09.04.2014  Bulletin 2014/15**

(73) Proprietors:
• **Hitachi, Ltd.**
**Tokyo (JP)**
• **Hitachi Mito Engineering Co., Ltd.**
**Hitachinaka-shi**
**Ibaraki (JP)**

(72) Inventors:
• **Shinomiya, Takeshi**
**Chiyoda-ku, Tokyo 100-8280 (JP)**
• **Kojima, Tetsuo**
**Chiyoda-ku, Tokyo 100-8280 (JP)**
• **Sugiura, Tetsu**
**Hitachinaka-shi, Ibaraki 312-8506 (JP)**
• **Kawamoto, Takehiro**
**Chiyoda-ku, Tokyo 100-8280 (JP)**
• **Muraoka, Kazufumi**
**Chiyoda-ku, Tokyo 100-8280 (JP)**

(74) Representative: **Mewburn Ellis LLP**
**City Tower**
**40 Basinghall Street**
**London EC2V 5DE (GB)**

(56) References cited:
**EP-A1- 2 417 697      EP-A2- 1 137 157
EP-A2- 2 495 859      US-B1- 6 349 044**

• **Anonymous: "L6699 - Enhanced high voltage
resonant controller - Datasheet", , 12 April 2012
(2012-04-12), pages 1-38, XP055050345,
Retrieved from the Internet:
URL:http://www.st.com/internet/com/TECHNIC
AL_RESOURCES/TECHNICAL_LITERATURE/D
ATASHEE T/DM00048921.pdf [retrieved on
2013-01-21]**

EP 2 717 451 B1

## Description

The present invention relates to DC power supply apparatuses and more particularly to a DC power supply apparatus that is installed in a railway vehicle and that is materialized by means of a DC-DC conversion including semiconductor switching elements, and a control method thereof.

In the case of a DC power supply apparatus, if arbitrary changing the magnitude of the DC voltage or stabilizing the unstable DC power supply is needed, or if generation of a DC power supply electrically isolated from the input of the DC power supply apparatus is needed, an isolated DC-DC converter is used. The isolated DC-DC converter includes a primary circuit for generating an alternate current from a direct current, an isolated transformer, and a secondary (rectifier) circuit for converting the alternate current into a direct current.

In the DC-DC converter, although the isolated transformer can be downsized by making applied frequencies higher, there arises a problem of how to suppress switching loss associated with the higher applied frequencies. In order to solve this problem, a soft switching method in which the switching loss is reduced with the use of a resonant circuit is well-known. Fig. 10 shows a circuit configuration disclosed in Patent Literature 1. This DC-DC converter includes a primary circuit for converting an alternate current from a direct current, a transformer, a secondary circuit for converting the alternate current into a direct current, and a smoothing filter, and feeds a DC power to a DC load.

This DC-DC converter includes a series circuit of a resonant capacitor and a switching element (referred to as a resonant switch hereinafter) between the output terminals of the secondary circuit in order to reduce a switching loss generated in the primary circuit. A resonant circuit is formed by the resonant capacitor and a leakage inductor on the secondary winding side of the transformer, and by turning on the resonant switch ahead of the turnoffs of main switching elements of the primary circuit, by reducing the secondary current of the transformer that should be cut off by the main switching elements to zero using a charge-discharge current of the resonant capacitor, and by reducing the primary current of the transformer to only the level of the exciting current of the transformer, a pseudo zero current cutoff (referred to as a zero current cutoff hereinafter) is realized, with the result that the turnoff loss on the primary circuit side can be greatly reduced.

On the other hand, such a DC-DC converter as this has the following problems as described below in the case where the load of the converter is a light load or the converter is initially started.

The first problem is a problem in that, if the load coupled to the converter becomes light when the converter is continuously running, the pulse width is made small by the primary circuit so that the energy supplied by the pulse becomes small. In this case, however, because it is necessary to make the pulse widths of pulses generated by the main switch elements and the resonant switch larger than a half of the resonant cycle of the resonant circuit owing to the convenience of the soft switching, the supplied energy has a lower limit. If an energy consumed by the load is smaller than the lower limit of the supplied energy, the value of the filter capacitor voltage on the output side of the DC-DC converter cannot be held constant, so that there arises a problem in that the value of the voltage across the filter capacitor becomes excessive.

The second problem is a problem in that, when the value of the filter capacitor voltage on the output side of the DC-DC converter is low, for example, when the capacitor of the filter on the output side of the DC-DC converter is initially charged, because the voltage difference between the voltage across the secondary terminals of the transformer and the voltage across the filter capacitor on the output side and an output current flows in accordance with this voltage difference, it becomes difficult to suppress the output current, with the result that there arises a problem in that the output current becomes excessive.

In order to solve the above two problems, a method to stop supplying energy in a predefined time period by thinning out the pulses of a DC-DC converter is proposed. For example, Patent Literature 2 discloses a pulse number reduction means in which the number of pulses output by a duty signal output means per unit time is reduced so that the output voltage of a smoothing circuit may become a target voltage in the case where the output voltage of the smoothing circuit is larger than the target voltage.

In addition, Patent Literature 3 discloses another pulse number reduction means in which a predefined number of continuous pulses, that is, pulses residing in one cycle are thinning out in a lot if an output voltage exceeds a predefined reference voltage, and if the output voltage still exceeds the predefined reference voltage in spite of the above thinning-out, pulses residing in another cycle are repeatedly thinning out. In other words, if the output voltage exceeds the predefined reference voltage, a process in which pulses residing in one cycle are thinning out in a lot is repeated until the output voltage becomes equal to or lower than the predefined reference voltage.

Citation List

Patent Literatures

Patent Literature 1: Japanese Unexamined Patent Application Publication No. Hei4(1992)-368464
Patent Literature 2: Japanese Unexamined Patent Application Publication No. 2009-296763
Patent Literature 3: Japanese Unexamined Patent Application Publication No. 2004-159473

EP2495859 discloses a DC power supply including a transformer, for making a semiconductor switch operate with a high frequency, in which an auxiliary circuit that reduces switching loss and a countermeasure circuit for a surge voltage generated in a rectifier diode are provided. In a DC power supply in which a DC power source and a transformer are connected via a power conversion circuit and a secondary winding of the transformer is connected to a load via a rectifier diode bridge and a filter circuit to supply power to the load, a resonance reactor is provided on an output side of the transformer, a resonant switch circuit including a parallel circuit of a diode and a semiconductor switch and a resonant capacitor is connected in parallel to the rectifier diode bridge and a snubber circuit including a snubber capacitor, a snubber diode and a diode for discharge is connected to a serial resonant circuit including the resonance reactor and the resonant capacitor in the resonant switch circuit to absorb a surge voltage.

In the case where the related arts disclosed in Patent Literatures 2 and 3 are applied to a soft switching type DC-DC converter, on which the present invention is based, it is easy to prevent the voltage of a filter capacitor on the DC-DC converter output side from becoming excessive when a load is a light load if the filter capacitor is charged to a predefined voltage value. However, in the case where the filter capacitor voltage on the output side (particularly in the case where the initial charging of the filter capacitor is performed when the filter capacitor voltage is zero), because the charging of the capacitor is performed with the use of the resonant energy induced by a resonant circuit, particularly if the inductance of the filter reactor is relatively smaller in comparison with the capacitance of the filter capacitor, the output current rapidly increases before the filter capacitor is sufficiently charged in the pulse thinning-out operation conducted by the related arts, which leads to a problem in that the apparatus may be broken down owing to the excessive current in the worst case. In addition, if the output current becomes larger than a resonant current flowing through the resonant circuit, it becomes impossible to execute the zero current cutoff by the soft switching.

In addition, in the normal continuous operation of the DC-DC-converter, a positive pulse voltage and a negative pulse voltage are alternately applied to the transformer; however, when the pulse thinning-out operation is performed, it is necessary to pay close attention to the polarity of the last pulse just before the start of the pulse thinning-out operation and the polarity of the first pulse just after the end of the pulse thinning-out operation. For example, if the polarity of the last pulse just before the start of the pulse thinning-out operation and the polarity of the first pulse just after the end of the pulse thinning-out operation are the same, there is a problem in that the transformer is magnetized in a biased manner when the stop time of pulses caused by the thinning out the pulses is short. If the biased magnetization of the transformer is intensified, the transformer gets to a magnetic saturation state, and there arises a problem in that the exciting current increases and the voltage waveform is distorted.

According to a first aspect of the present invention, there is provided a DC power supply apparatus according to claim 1.

According to a second aspect of the present invention, there is provided a control method of a DC power supply apparatus according to claim 6.

In the drawings:

Fig. 1 is a diagram showing a configuration example of a main circuit of a DC power supply apparatus according to any of a first and second embodiment of the present invention.

Fig. 2 is a diagram showing the operation waveforms in the DC power supply apparatus shown in Fig. 1.

Fig. 3 is a functional block diagram of a control device according to the first embodiment of the present invention.

Fig. 4 is a functional block diagram of a pulse thinning-out processing unit according to the first embodiment of the present invention.

Fig. 5 is a diagram showing the operation waveforms of the initial charging of a filter capacitor performed by the related art in the DC power supply apparatus shown in Fig. 1.

Fig. 6 is a diagram showing the operation waveforms of a filter reactor current and a filter capacitor voltage in the initial charging of the filter capacitor performed by the related art in the DC power supply apparatus shown in Fig. 1.

Fig. 7 is a diagram showing the operation waveforms of the initial charging of a filter capacitor according to the first embodiment of the present invention.

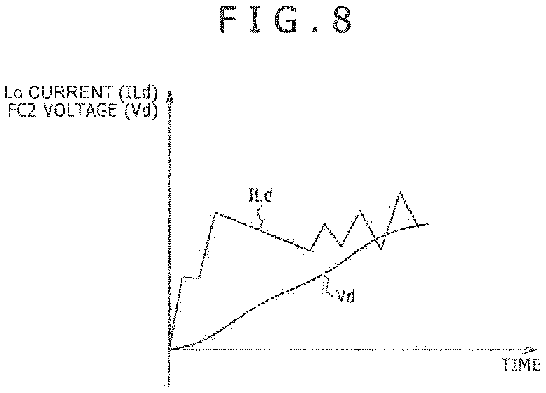

Fig. 8 is a diagram showing the operation waveforms of a filter reactor current and a filter capacitor voltage in the initial charging of the filter capacitor according to the first embodiment of the present invention.

Fig. 9 is a functional block diagram of a pulse thinning-out processing unit according to the second embodiment of the present invention.

Fig. 10 is a configuration example of a main circuit of a DC power supply apparatus.

Embodiments of the present invention will be described with reference to the accompanying drawings hereinafter.

First Embodiment

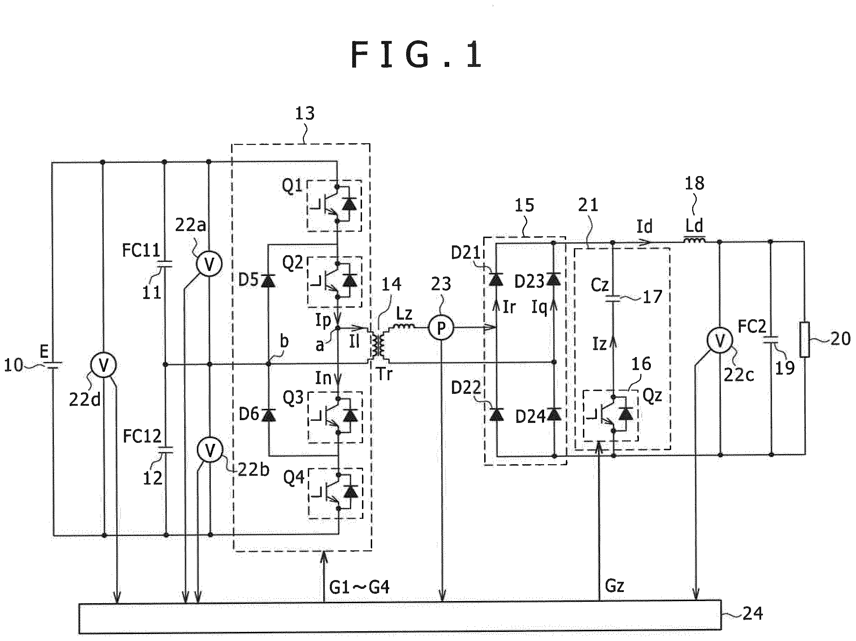

Fig. 1 is a diagram showing a configuration example of a main circuit of a DC power supply apparatus applicable to first and second embodiments of the present invention. This DC power supply apparatus comprises a DC-DC converter for supplying an output DC voltage, which has a value different from the value of an input DC voltage, to a load 20 in which the output DC voltage is isolated by a combination of a primary circuit 13 that brings in the voltage of a DC voltage source 10 and converts a direct current to an alternate current, a transformer 14, and a secondary circuit 15 for converting an alternate current to a direct current.

The primary circuit 13 is a three-level circuit including a series circuit of two filter capacitors 11 (FC11) and 12 (FC12) that is coupled in parallel to the DC voltage source 10. In other words, four main switching elements Q1 to Q4, each of which includes an antiparallel diode, are coupled in series, and a combination of series-coupled main switching elements Q1 and Q2 and a combination of series-coupled main switching elements Q3 and Q4 respectively form an upper arm and a lower arm. The upper arm and the lower arm are respectively coupled in parallel to the filter capacitors 11 (FC11) and 12 (FC12). In addition, a series circuit of clamp diodes D5 and D6 are coupled between the series-coupled point between the main switching elements in the upper arm and the main switching elements in the lower arm. In addition, the series-coupled point between these diodes D5 and D6 is coupled to the series-coupled point between the two filter capacitors 11 (FC11) and 12 (FC12). In addition, the series-coupled point "a" between the upper and lower arms and the series-coupled point "b" between the filter capacitors 11 (FC11) and 12 (FC12) make a pair of AC output terminals for an AC output, and are respectively coupled to two ends of a primary winding of the transformer 14. Additionally, a fourth voltage sensor 22d is coupled to the DC voltage source 10 in order to detect the voltage of this DC voltage source, and a first voltage sensor 22a and a second voltage sensor 22b are respectively coupled to the filter capacitors 11 (FC11) and 12 (FC12) in order to detect the voltages across the filter capacitors 11 (FC11) and 12 (FC12).

The transformer 14 for bringing in the AC output power of the primary circuit 13 outputs stepped-down AC power to the secondary circuit 15. A series circuit of a resonant switch 16 (Qz) and a resonant capacitor 17 is coupled to the DC output side of the secondary circuit 15, and when the resonant switch 16 is turned on, a resonant circuit is formed by the resonant switch 16 and a resonant reactor Lz of the inductance of the transformer 14. It will be assumed that the series circuit of the resonant switch 16 (Qz) and the resonant capacitor 17 is referred to as a resonant circuit 21 hereinafter. In addition, a current sensor 23 for detecting the output current of the transformer 14 is installed. In addition, a filter reactor 18 (Ld) and a filter capacitor 19 (FC2) are installed in order to smooth the DC power output by the secondary circuit 15, and the voltage across this filter capacitor 19 is supplied to the load 20. Additionally, a third voltage sensor 22c is installed in order to detect the voltage across the filter capacitor 19 (FC2).

While the main circuit is configured as described above, the DC power supply apparatus includes, as a control circuit, a control device 24 that brings in the output signals of the first voltage sensor 22a to the fourth voltage sensor 22d, the output signal of the current sensor 23, and outputs gate pulse signals G1 to G4, and Gz that are respectively supplied to the main switching elements Q1 to Q4 that comprise the primary circuit 13, and the switching element Qz that comprises the resonant switch 16.

This DC-DC converter can temporarily reduce a secondary current I2 of the transformer 14 to zero and a primary current I1 to only the level of the exciting current of the transformer 14 by activating the resonant switch 16 to the timings of the turnoffs of the main switching elements Q1 and Q4 of the primary circuit 13, and by superimposing a resonant current Iz onto the secondary current I2 of the transformer 14. By turning off the main switching elements Q1 and Q4 of the primary circuit 13 to these timings, the turnoff loss in the primary circuit 13 can be greatly reduced.

Although the primary current I1 and the secondary current I2 are zero, while the main switching elements Q1 to Q4 that comprise the primary circuit are off, back-flow currents continue to flow through diodes that comprise the secondary circuit 15. In the above state, if the main switching elements Q1 and Q2 or the main switching elements Q3 and Q4, which comprise the primary circuit 13, is turned on, the primary current I1 and the secondary current I2 begin to flow, and the magnitude of the secondary current I2 coincides with that of a load current Id. In this case, a current whose magnitude is equal to the magnitude of the secondary current I2 flows through one half of the diodes that comprise the secondary circuit 15 and a zero current flows through the other half of the diodes.

In the normal operation of such a DC-DC converter, after the resonant switch Qz is turned on and the resonant current flows before, for example, the main switching elements Q1 and Q2 are turned off, the main switching elements Q1 and Q2, and the resonant switch Qz are turned off, with the result that a zero current cutoff can be realized.

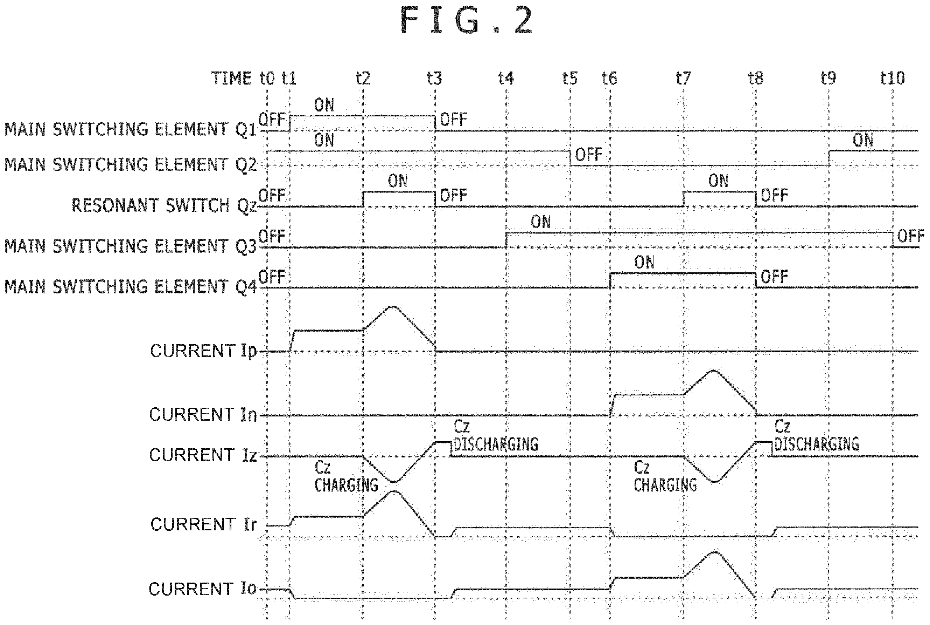

Fig. 2 is a diagram showing the operation waveforms in the main circuit of the DC power supply apparatus shown in Fig. 1.

With reference to these waveforms, the normal operation of the DC power supply apparatus shown in Fig. 1 will be described.

At the time t0, the main switching element Q1 is in the off-state, and the main switching element Q2 is in the on-state. The above state changes at the time t1, that is, the main switching element Q1 is turned on, then a current Ip flows through the main switching elements Q1 and Q2. At this time, a current Ir flows through diodes D21 and D24 of the secondary circuit 15.

At the time t2, the resonant switch Qz is turned on. After that, the resonant current Iz flows owing to the resonance between the resonant reactor Lz and a resonant capacitor Cz, and the resonant capacitor Cz is charged. Owing to this resonance operation, the current Ip that flows through the main switching elements Q1 and Q2, and the current Ir that flows through the diodes D21 and D24 also increase.

Afterward, at the time t3, although the gate signals to the main switching element Q1 and the resonant switch Qz are turned off, the resonant capacitor Cz is in a discharging state, and the load current Id is supplied from the resonant circuit 21, so the current Ir that flows through the diodes D21 and D24 is zero. As a result, the current Ip that flows through the main switching elements Q1 and Q2 is also reduced only to the exciting current of the transformer Tr. Therefore, by turning off the main switching element Q1 and the resonant switch Qz, soft switching can be realized.

At the time t4, the main switching element Q3 is turned on. At this time, if discharging from the resonant capacitor Cz has been finished, the load current Id flows back through the diodes D21 to D24 of the secondary circuit 15.

At the time t5, the main switching element Q2 is turned off. In this case, the current flowing through the main switching element Q2 is almost zero because the current is a very small current that flows back owing commutation in the normal operation of the DC-DC converter, which leads to a very small switching loss.

At the time t6, the main switching element Q4 is turned on, and a current In flows through the main switching elements Q3 and Q4. In this case, a current Iq flows through the diodes D22 and D23 of the secondary circuit 15.

At the time t7, the resonant switch Qz is turned on. After this turn-on of the resonant switch Qz, the resonant current Iz flows owing to the resonance between the resonant reactor Lz and the resonant capacitor Cz, and the resonant capacitor Cz is charged. Owing to this resonance operation, the current In that flows through the main switching elements Q3 and Q4, and the current Iq that flows through the diodes D22 and D23 also increase.

Afterward, at the time t8, although the gate signals to the main switching element Q4 and the resonant switch Qz are turned off, the resonant capacitor Cz is in a discharging state. At this time, the load current is supplied from the resonant circuit 21, so the current Ir that flows through the diodes D22 and D23 is zero. As a result, the current In that flows through the main switching elements Q3 and Q4 is also reduced only to the exciting current of the transformer Tr. Therefore, by turning off the main switching element Q4 and the resonant switch Qz, a zero current cutoff can be realized, with the result that a switching loss caused by the turnoff can be made maximally small.

At the time t9, the main switching element Q2 is turned on. At this time, because discharging from the resonant capacitor Cz has been finished, the load current Id flows back through the diodes D21 to D24 of the secondary circuit 15.

At the time t10, the main switching element Q3 is turned off. In this case, the current flowing through the main switching element Q3 is almost zero because the current is a very small current that flows back owing commutation in the normal operation of the DC-DC converter, which leads to a very small switching loss.

As described above, the zero current cutoff of the main switching elements of the primary circuit of the DC power supply apparatus that is equipped with the DC-DC converter shown in Fig. 1 is realized.

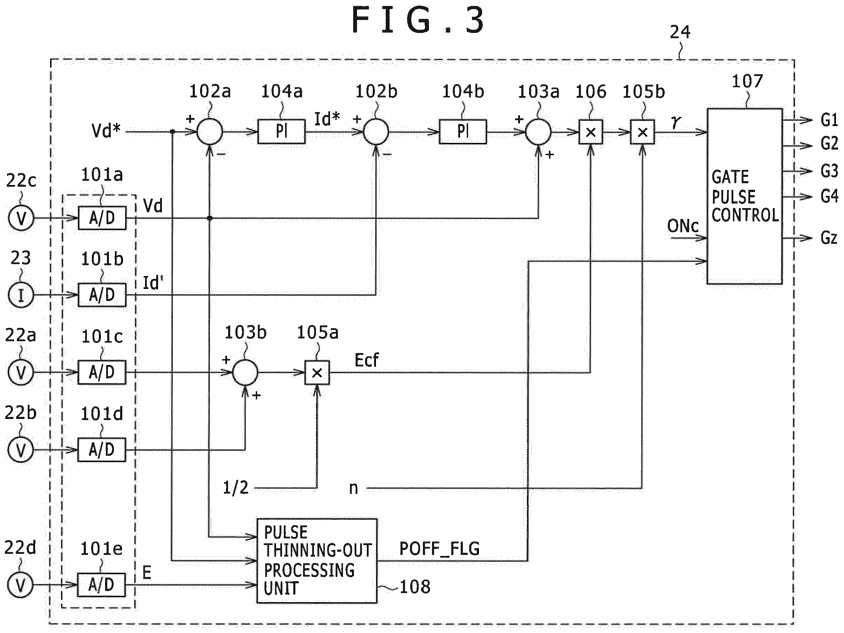

Fig. 3 is a functional block diagram of a control device according to the first embodiment of the present invention, and shows an concrete example of the control device 24 shown in Fig. 1. The control device 24 of the DC power supply apparatus includes: a first A/D converter 101a for bringing in the output signal of the third voltage sensor 22c; a second A/D converter 101b for bringing in the output signal of the first current sensor 23; a third A/D converter 101c for bringing in the output signal of the first voltage sensor 22a; a fourth A/D converter 101d for bringing in the output signal of the second voltage sensor 22b; a fifth A/D converter 101e for bringing in the output signal of the fourth voltage sensor 22d; a first subtractor 102a for calculating a difference between a DC output voltage command Vd* and the output signal (DC output voltage) Vd of the first A/D converter 101a; a first PI controller 104a for bringing in the output signal of the first subtractor 102a and outputting a load current command Id*; a second subtractor 102b for calculating a difference between the load current command Id* output by the first PI controller 104a and the output signal (estimated load current value) Id' of the second A/D converter 101b; a second PI controller 104b for bringing in the output signal of the second subtractor 102b; an adder 103a for adding the output signal of the second PI controller 104b and the output signal (DC output voltage) of the first A/D converter 101a; an adder 103b for adding the output signal of the third A/D converter 101c and the output signal of the fourth A/D converter 101d; a multiplier 105a for multiplying the output signal of the adder 103b by 1/2; a divider 106 for dividing the output signal of the adder 103a by the output signal of the multiplier 105a; a multiplier 105b for multiplying the output signal of the divider 106 by the turn ratio of the transformer 14 to calculate a conduction ratio γ; a pulse thinning-out processing unit 108 that brings in the DC output voltage command Vd*, the output signal (DC output voltage) Vd of the first A/D converter 101a, and the output of the fifth A/D converter 101e, and that performs pulse thinning-out processing to output a pulse-off signal POFF_FLG; and a gate pulse control 107 that brings in the conduction ratio γ; an on-command ONc, which turns on the main switching elements Q1 to Q4, and the resonant switch Qz; and the pulse-off signal POFF_FLG, and that outputs the gate pulse signals G1 to G4, which are sent respectively to the main switching elements Q1 to Q4; and the on-gate signal Gz, which is sent to the resonant switch Qz.

The above-described gate pulse control 107 outputs the gate pulse signals G1 to G4 that have pulse widths corresponding to the conduction ratio γ, and outputs the gate pulse signal Gz at a predefined timing when the on-command ONc is on. In addition, when the pulse-off signal POFF_FLG is on, the gate pulse control 107 turns off the gate pulse signals G1 to G4 that are sent respectively to the main switching elements Q1 to Q4, and the gate pulse signal Gz sent to the resonant switch Qz. In addition, the gate pulse control 107 memorizes the gate pulse signal that is last output at the timing when the pulse-off signal POFF_FLG is turned on while the on-command ONc is being on. Afterward, at the timing when the pulse-off signal POFF_FLG is turned off, the gate pulse control 107 outputs a gate pulse signal whose polarity is opposite to that of the gate pulse signal output just before the pulse-off. It will be assumed that the pulse-off is executed by outputting the gate pulse signals G1 and G2 in the on-state. Afterward, when the gate pulse signals are output in the on-state again, the gate pulse control 107 runs in such a way that the gate pulse signals G3 and G4 is output in the on-state first.

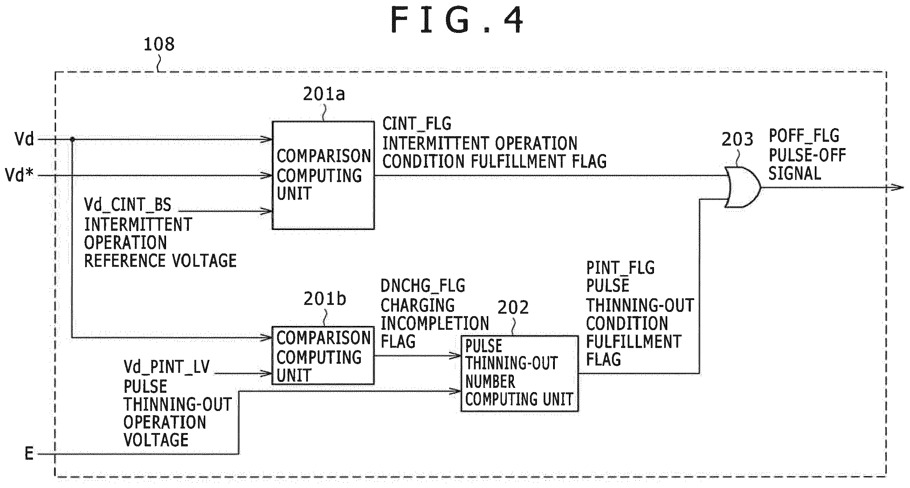

Fig. 4 is a functional block diagram of the pulse thinning-out processing unit 108 according to the first embodiment of the present invention. A comparison computing unit 201a brings in the DC output voltage Vd, the DC output voltage command Vd*, and an intermittent operation reference voltage Vd_CINT_BS, and if the DC output voltage Vd is larger than the sum of the DC output voltage command Vd* and an intermittent operation reference voltage Vd_CINT_BS, the intermittent operation condition fulfillment flag CINT_FLG is output in the on-state. In addition, if the DC output voltage Vd is equal to the DC output voltage command Vd* or is smaller than a predefined voltage (for example, the value obtained by subtracting the intermittent operation reference voltage Vd_CINT_BS from the DC output voltage command Vd*), the intermittent operation condition fulfillment flag CINT_FLG) is output in the off-state.

A comparison computing unit 201b brings in the DC output voltage Vd and a pulse thinning-out operation voltage Vd_PINT_LV, and outputs a charging incompletion flag DNCHG_FLG if the DC output voltage Vd is lower than the pulse thinning-out operation voltage Vd_PINT_LV.

A pulse thinning-out number computing unit 202 brings in the charging incompletion flag DNCHG_FLG and the voltage E of the DC voltage source, and outputs a pulse thinning-out condition fulfillment flag.

Successively, the pulse thinning-out number computing unit 202 determines the number of pulses that can be continuously output on the basis of the voltage E of the DC voltage source when the charging incompletion flag DNCHG_FLG is on, and if the number of the output pulse becomes equal to or larger than the determined number, the pulse thinning-out number computing unit 202 outputs the pulse thinning-out condition fulfillment flag in the on-state. Afterward, the pulse thinning-out number computing unit 202 determines a time period during which pulses are continuously put in the off-state, and after a predefined time elapses, the pulse thinning-out number computing unit 202 outputs the pulse thinning-out condition fulfillment flag PINT_FLG in the off-state.

A logical adder 203 brings in the intermittent operation condition fulfillment flag CINT_FLG and the pulse thinning-out condition fulfillment flag PINT_FLG, and outputs the result of the logical addition as a pulse-off signal POFF_FLG. Therefore, at the timing when a pulse-off condition fulfillment flag is turned on, the output of pulses by the main switching elements Q1, Q4, and by the resonant switch Qz stop, that is, the main switching elements Q1, Q4, and the resonant switch Qz remain in the off-state, with the result that a pulse thinning-out operation is performed.

A method for configuring the number of times of outputting on-pulses and a pulse thinning-out time period in the pulse thinning-out number computing unit 202, and an operation example of the initial charging of the filter capacitor 19 will be described in detail hereinafter.

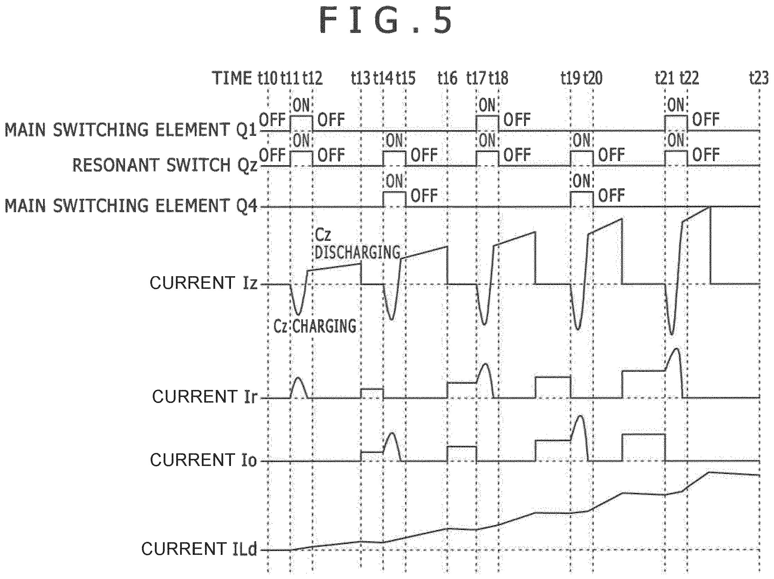

For example, on a premise that the transformer, wirings, switching elements have no losses, it will be assumed that the voltage of the DC voltage source 10 is Ea, the inductance of the resonant reactor Lz is Lza, the capacity of the resonant capacitor 17 is Cza, the turn ratio (=primary turn number/secondary turn number) of the transformer 14 is n, and the initial voltage value of the filter capacitor 19 is zero. In the initial charging, the conduction ration γ is set to the minimum conduction ratio that is limited in accordance with three quarters of the resonant cycle owing to the soft switching. Therefore, in contrast to the voltage and current waveforms of the normal operation shown in Fig. 2, the voltage and current waveforms in this case become waveforms shown in Fig. 5 that are peculiar to a charging operation. This charging operation will be described with reference to Fig. 5. Descriptions of the operations of the main switching elements Q2 and Q3 are omitted for simplicity in Fig. 5 for the sake of simplicity.

At the time t11, the main switching elements Q1 is turned on, and at the same time the resonant switch Qz is turned on. As a result, a resonant current flows and the resonant capacitor Cz is charged. Let's denote the resonant current by iz, the time by t, the resonant angular frequency of the resonant reactor Lz and the resonant capacitor 17 by ωz, and the resonant cycle by Tz, and then iz is given by Equation 1.

[Equation 1]

$$i_z = \frac{E_a}{2n}\sqrt{\frac{C_z}{L_z}}\sin \omega_z t = \frac{E_a}{2n}\sqrt{\frac{C_z}{L_z}}\sin \frac{1}{\sqrt{L_z C_z}}t$$

$$\omega_z = \frac{1}{\sqrt{L_z C_z}} = \frac{2\pi}{T_z}$$

In addition, the charging voltage of the resonant capacitor 17 is given by Equation 2.

[Equation 2]

$$V_{cz} = \frac{1}{C_z}\int i_z \cdot dt$$

The maximum voltage Vczm of the resonant capacitor 17 during one resonant cycle is obtained when t is a half of the resonant cycle Tz, and Equation 3 is obtained by substituting Equation 1 into Equation 2.

[Equation 3]

$$V_{czm} = \frac{1}{C_z}\int_0^{T_z/2} i_z \cdot dt = 2 \cdot \frac{E_a}{2n}$$

The maximum voltage becomes double the output voltage (Ea/2n) on the secondary side of the transformer 14. In this case, the resonant energy is given by Equation 4.

[Equation 4]

$$E_z = \frac{1}{2}C_z V_{czm}^2$$

It will be assumed that the voltage at the connection point of the filter reactor 18, the diodes D21 and D23, and the resonant capacitor 17 is equal to the secondary output voltage (Ea/2n) of the transformer 14, that is, it is constant, during the time when the main switching elements Q1 or Q4 remains in the on-state for the sake of simplicity. In this case, if the inductance of the filter reactor 18 is denoted by Lda, and the pulse on time period is denoted by ton, the current ILda flowing through the filter reactor 18 is given by Equation 5 because the initial voltage of the filter capacitor 19 is zero, and the energy ELdx induced by this current is given by Equation 6. In addition, the pulse on time period ton is a time period corresponding to the minimum conduction ratio $\gamma$ that is limited in accordance with three quarters of the resonant cycle of the resonant circuit.

[Equation 5]

$$I_{Lda} = \frac{\left(\frac{E_a}{2n}\right) - 0}{L_{da}} \cdot t_{ON}$$

[Equation 6]

$$E_{Ldx} = \frac{1}{2} L_{da} I_{Lda}^2$$

At the time t12 just after the time when the main switching element Q1 and the resonant switch Qz are turned off, a current corresponding to the sum of the energy given by Equation 6 and the resonant energy given by Equation 4 flows back through the filter reactor 18, the filter capacitor 19, and the resonant circuit 21 as the maximum charging current flowing through the filter capacitor 19. This current ILdb is given by Equation 7 with the use of Equation of the energy of the reactor. In other words, in the initial charging, the current flowing through the filter reactor is incremented by the current given by Equation 7 per pulse. The current ILdb shown at the time t13 when only one on-pulse is output in Fig. 5 is a current added per pulse.

[Equation 7]

$$I_{Ldb} = \sqrt{\frac{2}{L_{da}}(E_{Ldx} + E_z)}$$

When the resonant capacitor 17 finishes discharging, a current flows back through the filter reactor 18, the filter capacitor 19, and the diodes D21 to D24. At the time t14, the main switching element Q4 and the resonant switch Qz are turned on, and the second pulse is output.

The current ILdb_p2 flowing through the filter reactor 18 after the second pulse is output can be obtained by adding ILda_p2, which is caused by the second pulse and given by Equation 5, to ILdb_p1, which is caused by the first pulse and given by Equation 7, by substituting the additional value of ILda_p2 and ILdb_p1 into ILda of Equation 6, by calculating the energy ELdx_p2 caused by the second pulse with the use of Equation 6, and by substituting the energy ELdx_p2 caused by the second pulse into ELdx of Equation 7. The current ILdb shown at the time t16 in Fig. 5 is the current flowing through the filter reactor 18 caused by the second pulse. For the third pulse and the pulses that follow, the above calculation is repeated, and the current ILdb that flows through the filter reactor 18 corresponding to the number of times of outputting on-pulses can be obtained.

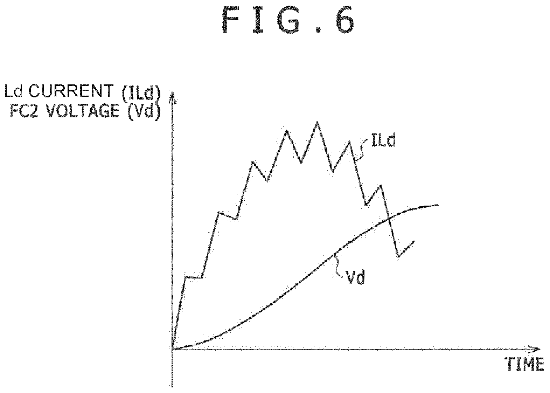

Usually, the resonant cycle of the filter reactor 18 and the filter capacitor 19 is sufficiently larger compared with that of the resonant reactor Lz and the resonant capacitor 17 (that is, the inductance of the filter reactor 18 and the capacity of the filter capacitor 19 are sufficiently larger compared with the inductance of the resonant reactor Lz and the capacity of the resonance capacitor respectively), and the capacity of the filter capacitor 19 is large. Because the capacity of the filter capacitor 19 is very large, the filter capacitor 19 is not quickly charged as shown in Fig. 6. The voltage Vd across the filter capacitor 19 therefore does not increase quickly. In addition, because the current ILd flowing through the filter reactor 18 hardly decreases during the time period when the pulse remains in the off-state, the charging current shown by Equation 7, that is, ILd shown in Fig. 6, is incremented every time the switching is performed (every time an on-pulse is output), that is, ILd is incremented in accordance with the resonant operation. Therefore, there is a problem in that the current ILd flowing through the filter reactor 18 increases rapidly to be excessive in the initial charging when the voltage of the filter capacitor 19 is increased from zero.

In addition, if the current flowing through the filter reactor 18 exceeds the maximum resonant current, that is, the value shown by Equation 8 that can be derived from Equation 1, the current that is supplied only by the current discharged from the resonant circuit 21 is not sufficient for the current flowing through the filter reactor 18 (charging current).

[Equation 8]

$$\frac{E_a}{2n}\sqrt{\frac{C_z}{L_z}}$$

As a result, a current flowing through the filter reactor 18, the transformer 14, and the diodes D21 to D24 is used to make up the shortfall of the charging current. Therefore, it becomes impossible to set the secondary current of the transformer 14 to zero, and further it becomes impossible to reduce the primary current, which flows through the main switching elements Q1 to Q4 and which is to be cutoff, to the level of the exciting current of the transformer, so that it becomes impossible to perform the soft switching. As a result, in order to realize the soft switching in the initial charging, it becomes necessary that the number of times of outputting on-pulses should be limited with the use of the pulse thinning-out number computing unit 202 so that the current flowing through the filter reactor 18 becomes equal to or smaller than the resonant current.

It will be assumed that, when the voltage Ea of the DC voltage source is the rated voltage, after five on-pulses are output in the first operation of the initial charging, the current ILd flowing through the filter reactor 18 reaches an upper limit of the output current.
Conversely, if it is necessary to set the current ILd flowing through the filter reactor 18 equal to or smaller than the upper limit, the output of on-pulses has only to be stopped with the use of the thinning-out processing after five on-pulses are continuously output (during two and a half cycle). The number of times of outputting on-pulses can be determined by the pulse thinning-out number computing unit in such a way as above.

In addition, when the voltage Ea of the DC voltage source is larger than the rated voltage, because the energy supplied by the resonant current becomes large, if it is desired that the current flowing thorough the filter reactor 18 is set to be equal to or smaller than the above upper limit, it is necessary to make the number of times of continuously outputting on-pulses smaller than that of the case where the voltage Ea of the DC voltage source is equal to the rated voltage. On the other hand, when the voltage Ea of the DC voltage source is smaller than the rated voltage, because the energy supplied by the resonant current becomes small, if it is desired that the current flowing thorough the filter reactor 18 is set equal to or smaller than the above upper limit, the number of times of continuously outputting on-pulses can be made larger than that of the case where the voltage Ea of the DC voltage source is equal to the rated voltage. As mentioned above, because the maximum number of times of continuously outputting on-pulses to limit the current flowing thorough the filter reactor 18 varies on the basis of the voltage of the DC voltage source, it is advantageous to make the number of times of outputting on-pulses configurable on the basis of the DC voltage E when the DC voltage source varies in a wide range.

In addition, it is not always necessary to directly detect the voltage E of the DC voltage source, and the number of times of continuously outputting on-pulses can be determined on the basis of the sum of the voltages across the filter capacitors 11 and 12.

In the initial charging operation, the DC output voltage command Vd* is set to be launched with a predefined variation from a target value, and after a predefined number of pulses are output with the use of the pulse thinning-out operation, the current flowing through the filter reactor 18 decreases and at the same time the charging voltage across the filter capacitor 19 gradually increases. Owing to these phenomena, the intermittent operation condition fulfillment flag CINT_FLG is output in the on-state during the time period of pulse-off, so that the pulse-off state continues. It is necessary that the time period of pulse-off set by the pulse thinning-out number computing unit 202 should last until the time when the current flowing through the filter reactor 18 decreases to some extent and the voltage across the filter capacitor 19 increases to some extent during the pulse-off. The gradient of the current flowing through the filter reactor 18 is equal to the output voltage across the filter reactor/the inductance of the filter reactor 18. However, because usually the current flowing through the filter reactor 18 decreases and the voltage across the filter capacitor 19 increases sufficiently quickly in comparison with the rising variation of the DC output voltage command Vd*, it is not always necessary that the pulse thinning-out number computing unit 202 should secure a time period until the current flowing through the filter reactor 18 decrease to zero as the time period of pulse-off. To put it concretely, it is sufficient to set the time period of pulse-off to a small value equal to or shorter than a quarter of the resonant cycle of the filter reactor 18 and the filter capacitor 19. During the time period while this intermittent operation condition fulfillment flag CINT_FLG is in the on-state, the pulse thinning-out condition fulfillment flag PINT_FLG that is the output of the pulse thinning-out number computing unit 202 is turned off, and afterward the DC output voltage command Vd* increases, and the intermittent operation condition fulfillment flag CINT_FLG is output in the on-state, which makes the output of pulses is restarted and the charging operation continues. At the time when the output of pulses is restarted, the voltage across the filter capacitor 19 has risen to a certain voltage value. Therefore, even if the same number of on-pulses as in the previous case are output, the increase of the current flowing through the filter reactor 18 is suppressed in comparison with the previous charging operation which is started from the state of the voltage across the filter capacitor 19 being zero. In addition, the gate pulse control 107 configures this pulse thinning-out operation so that the polarity of the last pulse just before the start of the pulse thinning-out operation and the polarity of the first pulse when the output of pulses is restarted just after the end of the pulse thinning-out operation are opposite to each other as shown at the times t14, t15, t21, and t22, with the result that the biased magnetization of the transformer 14 can be prevented from occurring. In this way, by presetting the number of times of outputting on-pulses and performing the operation of thinning-out on-pulses in the initial charging, the current flowing through the filter reactor can be suppressed not to be an excessive current, and at the same time the biased magnetization of the transformer can be prevented from occurring. This configuration does not need a voltage sensor for detecting the current flowing through the filter reactor 18 in comparison with the configuration in which an excessive current is suppressed by thinning-out pulses when the current flowing through the filter reactor 18 becomes equal to or larger than a predefined value through the detection of the current. Therefore the cost of the DC power supply apparatus can be reduced, and the credibility of the apparatus can be economically improved.

Second Embodiment

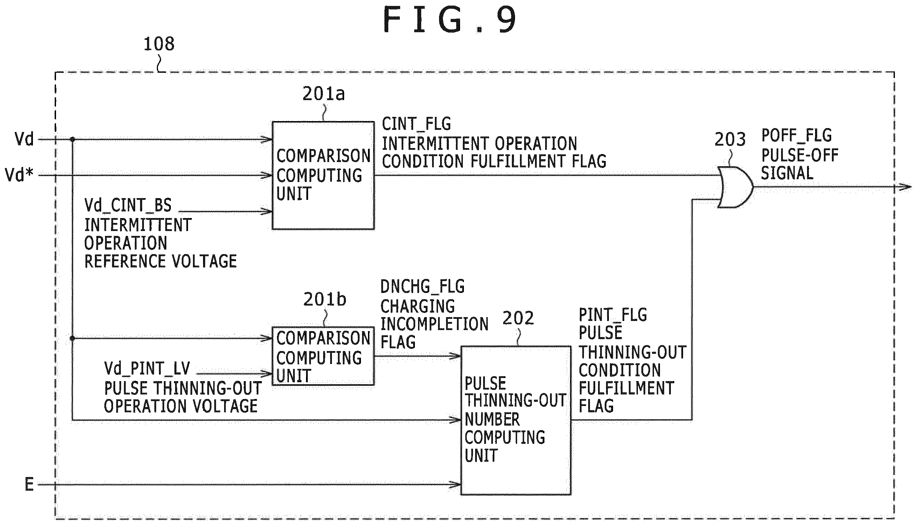

Fig. 9 is a functional block diagram of a pulse thinning-out processing unit 108 according to the second embodiment of the present invention. A different point from Fig. 4 resides in the fact that the DC output voltage Vd is input into the pulse thinning-out number computing unit 202. The DC output voltage Vd is used in such a way that the switching from the on-state to off-state of the output of the pulse thinning-out condition fulfillment flag PINT_FLG in the pulse thinning-out number computing unit 202 is performed not after the predefined time period elapses, but it is performed on the basis of the DC output voltage Vd. The voltage value to which the charging voltage will reach is estimated on the basis of the number of times of outputting on-pulses in the pulse thinning-out number computing unit 202 and the DC output voltage Vd at the time when the first on-pulse is output. When the charging voltage reaches the estimated voltage value, and the switching from the on-state to off-state of the output of the pulse thinning-out condition fulfillment flag PINT_FLG is performed, so that the charging operation continues. Because the current flowing through the filter reactor 18 has been small at the time point when the charging voltage almost reaches the estimated voltage value, the output of pulses is restarted and the charging operation is continued again at this time point. It will be assumed that the estimated voltage is a voltage that the DC output voltage Vd reaches after the DC output voltage Vd is increased almost by a charging voltage ∆Vc that is induced by energy of the current ILdb calculated by Equation 7 with the use of the number of times of outputting on-pulses. The charging voltage ∆Vc is calculated by Equation 9 as below:

[Equation 9]

$$\Delta V_c = \sqrt{\frac{L_{da}}{C_{FC2}}} \cdot I_{Ldb}$$

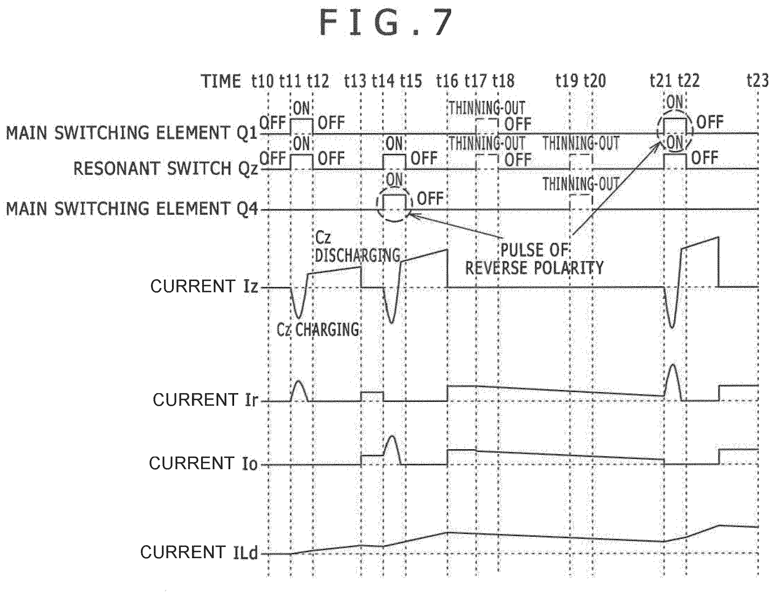

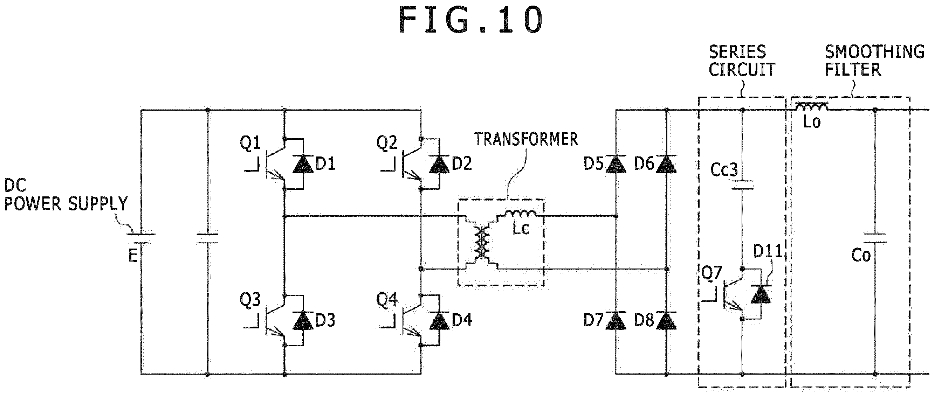

In each of the above described embodiments, an example in which three level output circuit as shown in Fig. 1 is applied to the primary circuit has been described, but two level output circuit as shown in Fig. 10 can also be applied to the primary circuit. In this case, the switching timings of Q1 and Q4 in Fig. 10 can be replaced with that of Q1 in Fig. 2, and the switching timings of Q2 and Q3 in Fig. 10 can be replaced with that of Q4 in Fig. 2. In addition, by replacing the switching timings of Q1 and Q4 in Fig. 10 with the switching timings of Q1 in Fig. 5 and Q1 in Fig. 7 respectively and replacing the switching timings of Q2 and Q3 in Fig. 10 with the switching timings of Q4 in Fig. 5 and Q4 in Fig. 7 respectively, the present invention can be applied to the circuit in Fig. 10.

**Claims**

1. A DC power supply apparatus comprising:

    a DC voltage source (10);
    a primary circuit (13) for converting the DC power of the DC voltage source (10) into an AC power using the operations of switching elements (Q1 to Q4);

a transformer (14) for bringing in the AC power output by the primary circuit (13);
a secondary circuit (15) for converting the AC power output by the transformer (14) into a DC power;
a resonant circuit (21) that is coupled to the DC output side of the secondary circuit (15) in parallel, and that includes a series circuit of a resonant switching element (16, Qz) and a resonant capacitor (17);
a filter circuit that includes a reactor (18) and a capacitor (19), which is arranged to smooth DC power output by the secondary circuit (15); and
a control device (24) that is arranged to control the on/off-states of the switching elements (Q1 to Q4) of the primary circuit (13),

**characterized in that**:

when the voltage across the capacitor of the filter circuit is equal to or smaller than a predefined voltage value, the control device (24) is arranged to keep one or more of the switching elements (Q1 to Q4) in the on-state so that a pulse voltage is being applied to the transformer (14) whereby a current flowing through the reactor (18) of the filter circuit becomes equal to or smaller than the maximum current value of the resonant current induced by the resonant element and the control device is further arranged to keep the resonant switching element in the on-state, and to keep one or more of the switching elements (Q1 to Q4) in the on-state so that a pulse voltage is being applied to the transformer and to keep the resonant switching element in the on-state a predefined number of times and to keep thereafter all of the switching elements (Q1 to Q4) and the resonant switching element in the off-state during a predefined time period, wherein the predefined time period is at least as long as the resonant cycle of the resonant switching element.

2. The DC power supply apparatus according to claim 1,
wherein the predefined time period that is equal to or longer than the length of time of the resonant cycle of the resonant switching element (16, Qz) is a time period until the time when a current flowing through the reactor (18) of the filter circuit decreases to be equal to or smaller than a predefined value and the voltage across the capacitor (19) of the filter circuit increases to be equal to or larger than a predefined value.

3. The DC power supply apparatus according to claim 1 or claim 2,
wherein the predefined number of times the control means is arranged to put one or more of the switching elements (Q1 to Q4) and the resonant switching element (16, Qz) in the on-state is determined on the basis of the voltage of the DC voltage source (10) and the constants of the filter circuit and the resonant circuit (21).

4. The DC power supply apparatus according to claim 1 or claim 2,
wherein the predefined number of times the control means is arranged to put one or more of the switching elements (Q1 to Q4) and the resonant switching element (16, Qz) in the on-state is determined so that a current flowing through the reactor (18) of the filter circuit becomes equal to or smaller than the maximum current value of the resonant current induced by the resonant circuit (21).

5. The DC power supply apparatus according to any of claim 1 to claim 4,
wherein the control device (24) is arranged to memorize the polarity of the last output voltage when one or more of the switching elements (Q1 to Q4) and the resonant switching element (16, Qz) are put in the on-state the predefined number of times, and, when one or more of the switching elements (Q1 to Q4) and the resonant switching element (16, Qz) are again put in the on-state after the predefined time period elapses, the control device (24) is arranged to output the first output voltage with a polarity opposite to the memorized polarity of the last output voltage.

6. A control method of a DC power supply apparatus that includes:

a DC voltage source (10);
a primary circuit (13) for converting the DC power of the DC voltage source (10) into an AC power using the operations of switching elements (Q1 to Q4);
a transformer (14) for bringing in the AC power output by the primary circuit (13);
a secondary circuit (15) for converting the AC power output by the transformer (14) into a DC power;
a resonant circuit (21) that is coupled to the DC output side of the secondary circuit (15) in parallel, and that includes a series circuit of a resonant switching element (16, Qz) and a resonant capacitor (17);
a filter circuit that includes a reactor (18) and a capacitor (19), and smoothes DC power output by the secondary circuit (15); and
a control device (24) that controls the on/off-states of the switching elements (Q1 to Q4) of the primary circuit (13),

**characterized in that**:

when the voltage across the capacitor (19) of the filter circuit is equal to or smaller than a predefined voltage value, the control method comprises the steps of:

keeping one or more of the switching elements (Q1 to Q4)and the resonant switching element (16, Qz) in the on-state a predefined number of times so that a current flowing through the reactor (18) of the filter circuit becomes equal to or smaller than the maximum current value of the resonant current induced by the resonant element,

and thereafter keeping all of the switching elements (Q1 to Q4) and the resonant switching element (16, Qz) in the off-state during a predefined time period, wherein the predefined time period is at least as long as the resonant cycle of the resonant switching element.

**Patentansprüche**

1. Gleichstromleistungsversorgungsvorrichtung, umfassend:

eine Gleichspannungsquelle (10);
einen Primärschaltkreis (13) zur Umwandlung der Gleichstromleistung der Gleichspannungsquelle (10) in eine Wechselstromleistung durch Verwenden der Operationen von Schaltelementen (Q1 bis Q4);
einen Transformator (14) zum Einbringen der von dem Primärschaltkreis (13) ausgegebenen Wechselstromleistung;
einen Sekundärschaltkreis (15) zur Umwandlung der vom Transformator (14) ausgegebenen Wechselstromleistung in eine Gleichstromleistung;
einen Resonanzschaltkreis (21), der mit der Gleichstromausgangsseite des Sekundärschaltkreises (15) parallel gekoppelt ist, und der eine Serienschaltung eines Resonanzschaltelements (16, Qz) und eines Resonanzkondensators (17) umfasst;
einen Filterschaltkreis, der eine Drosselspule (18) und einen Kondensator (19) umfasst, und der so ausgelegt ist, dass er eine von dem Sekundärschaltkreis (15) ausgegebene Gleichstromleistung glättet; und
eine Steuervorrichtung (24), die so ausgelegt ist, dass sie den EIN-/AUS-Zustand der Schaltelemente (Q1 bis Q4) des Primärschaltkreises (13) steuert,

**dadurch gekennzeichnet,**

**dass** dann, wenn die Spannung am Kondensator des Filterschaltkreises gleich oder kleiner als ein vordefinierter Spannungswert ist, die Steuervorrichtung (24) so ausgelegt ist, dass sie eines oder mehrere der Schaltelemente (Q1 bis Q4) im EIN-Zustand hält, sodass eine Pulsspannung an den Transformator (14) angelegt wird, wodurch ein durch die Drosselspule (18) des Filterschaltkreises hindurchfließender Strom gleich oder kleiner als der Maximalstromwert des von dem Resonanzelement induzierten Resonanzstroms wird, und die Steuervorrichtung ferner ausgelegt ist, um das Resonanzschaltelement im EIN-Zustand zu halten, und eines oder mehrere der Schaltelemente (Q1 bis Q4) im EIN-Zustand zu halten, sodass eine Pulsspannung an den Transformator angelegt wird, und das Resonanzschaltelement eine vordefinierte Anzahl von Malen im EIN-Zustand zu halten, und danach alle der Schaltelemente (Q1 bis Q4) und das Resonanzschaltelement während einer vordefinierten Zeitspanne im AUS-Zustand zu halten, wobei die vordefinierte Zeitspanne zumindest so lange wie der Resonanzzyklus des Resonanzschaltelements ist.

2. Gleichstromleistungsversorgungsvorrichtung gemäß Anspruch 1, wobei die vordefinierte Zeitspanne, die gleich oder länger als die Länge der Zeit des Resonanzzyklus des Resonanzschaltelements (16, Qz) ist, eine Zeitspanne bis zu dem Zeitpunkt ist, in dem ein durch die Drosselspule (18) des Filterschaltkreises hindurchfließender Strom abnimmt, um gleich oder kleiner als ein vordefinierter Wert zu sein, und die Spannung an dem Kondensator (19) des Filterschaltkreises sich erhöht, um gleich oder größer als ein vordefinierter Wert zu sein.

3. Gleichstromleistungsversorgungsvorrichtung gemäß Anspruch 1 oder Anspruch 2, wobei die vordefinierte Anzahl von Malen, in denen das Steuerungsmittel so ausgelegt ist, dass es eines oder mehrere der Schaltelemente (Q1 bis Q4) und das Resonanzschaltelement (16, Qz) in den EIN-Zustand bringt, auf Basis der Spannung der Gleichspannungsquelle (10) und der Konstanten des Filterschaltkreises und des Resonanzschaltkreises (21) bestimmt wird.

4. Gleichstromleistungsversorgungsvorrichtung gemäß Anspruch 1 oder Anspruch 2, wobei die vordefinierte Anzahl von Malen, in denen das Steuerungsmittel so ausgelegt ist, dass es eines oder mehrere der Schaltelemente (Q1 bis Q4) und das Resonanzschaltelement (16, Qz) in den EIN-Zustand bringt, so bestimmt wird, dass ein durch die Drosselspule (18) des Filterschaltkreises hindurchfließender Strom gleich oder kleiner als der Maximalstromwert des von dem Resonanzschaltkreis (21) induzierten Resonanzstroms wird.

5. Gleichstromleistungsversorgungsvorrichtung gemäß einem der Ansprüche 1 bis 4,
wobei die Steuervorrichtung (24) so ausgelegt ist, dass sie die Polarität der letzten Ausgangsspannung speichert, wenn eines oder mehrere der Schaltelemente (Q1 bis Q4) und das Resonanzschaltelement (16, Qz) die vorbestimmte Anzahl von Malen in den EIN-Zustand gebracht sind, und wenn eines oder mehrere der Schaltelemente (Q1 bis Q4) und das Resonanzschaltelement (16, Qz) nach Ablaufen der vordefinierten Zeitspanne erneut in den EIN-Zustand gebracht werden, wobei die Steuervorrichtung (24) so ausgelegt ist, dass sie die erste Ausgangsspannung mit einer der gespeicherten Polarität der letzten Ausgangsspannung entgegengesetzten Polarität ausgibt.

6. Steuerungsverfahren einer Gleichstromleistungsversorgungsvorrichtung, die Folgendes umfasst:

eine Gleichspannungsquelle (10);
einen Primärschaltkreis (13) zur Umwandlung der Gleichstromleistung der Gleichspannungsquelle (10) in eine Wechselstromleistung durch Verwenden der Operationen von Schaltelementen (Q1 bis Q4);
einen Transformator (14) zum Einbringen der von dem Primärschaltkreis (13) ausgegebenen Wechselstromleistung;
einen Sekundärschaltkreis (15) zur Umwandlung der vom Transformator (14) ausgegebenen Wechselstromleistung in eine Gleichstromleistung;
einen Resonanzschaltkreis (21), der mit der Gleichstromausgangsseite des Sekundärschaltkreises (15) parallel gekoppelt ist, und der eine Serienschaltung eines Resonanzschaltelements (16, Qz) und eines Resonanzkondensators (17) umfasst;
einen Filterschaltkreis, der eine Drosselspule (18) und einen Kondensator (19) umfasst und die von dem Sekundärschaltkreis (15) ausgegebene Gleichstromleistung glättet; und
eine Steuervorrichtung (24), die den EIN-/AUS-Zustand der Schaltelemente (Q1 bis Q4) des Primärschaltkreises (13) steuert,

**dadurch gekennzeichnet,**
**dass** dann, wenn die Spannung am Kondensator (19) des Filterschaltkreises gleich oder kleiner als ein vordefinierter Spannungswert ist, das Steuerungsverfahren die folgenden Schritte umfasst:

Halten von einem oder mehreren der Schaltelemente (Q1 bis Q4) und des Resonanzschaltelements (16, Qz) eine vordefinierte Anzahl von Malen in dem EIN-Zustand, sodass ein durch die Drosselspule (18) des Filterschaltkreises hindurchfließender Strom gleich oder kleiner als der Maximalstromwert des von dem Resonanzelement induzierten Resonanzstroms wird,
und anschließendes Halten aller Schaltelemente (Q1 bis Q4) und des Resonanzschaltelements (16, Qz) während einer vordefinierten Zeitspanne in dem AUS-Zustand, wobei die vordefinierte Zeitspanne zumindest so lang wie der Resonanzzyklus des Resonanzschaltelements ist.

**Revendications**

1. Appareil d'alimentation en courant continu comprenant :

une source de tension continue (10) ;
un circuit primaire (13) destiné à convertir la puissance en courant continu de la source de tension continue (10) en une puissance en courant alternatif, en utilisant les opérations d'éléments de commutation (Q1 à Q4) ;
un transformateur (14) destiné à introduire la puissance en courant alternatif fournie en sortie par le circuit primaire (13) ;
un circuit secondaire (15) destiné à convertir la puissance en courant alternatif fournie en sortie par le transformateur (14) en une puissance en courant continu ;
un circuit résonant (21) qui est couplé, en parallèle, au côté de sortie de courant continu du circuit secondaire (15), et qui inclut un circuit en série d'un élément de commutation résonant (16, Qz) et d'un condensateur résonant (17);

un circuit filtrant qui inclut une bobine de réactance (18) et un condensateur (19), lequel est agencé de manière à lisser la puissance en courant continu fournie en sortie par le circuit secondaire (15) ; et

un dispositif de commande (24) qui est agencé de manière à commander les états de marche/arrêt des éléments de commutation (Q1 à Q4) du circuit primaire (13) ;

**caractérisé en ce que** :

lorsque la tension à travers le condensateur du circuit filtrant est égale ou inférieure à une valeur de tension prédéfinie, le dispositif de commande (24) est agencé de manière à maintenir un ou plusieurs des éléments de commutation (Q1 à Q4) à l'état de marche de sorte qu'une tension d'impulsion est appliquée au transformateur (14), moyennant quoi un courant circulant à travers la bobine de réactance (18) du circuit filtrant devient égal ou inférieur à la valeur de courant maximale du courant résonant induit par l'élément résonant, et le dispositif de commande est en outre agencé de manière à maintenir l'élément résonant dans l'état de marche, et à maintenir un ou plusieurs des éléments de commutation (Q1 à Q4) à l'état de marche de sorte qu'une tension d'impulsion est appliquée au transformateur, et à maintenir l'élément de commutation résonant à l'état de marche, un nombre prédéfini de fois, et à maintenir subséquemment tous les éléments de commutation (Q1 à Q4) et l'élément de commutation résonant à l'état d'arrêt au cours d'une période de temps prédéfinie, dans lequel la période de temps prédéfinie est au moins aussi longue que le cycle résonant de l'élément de commutation résonant.

2. Appareil d'alimentation en courant continu selon la revendication 1,
dans lequel la période de temps prédéfinie qui est égale ou supérieure à la durée du cycle résonant de l'élément de commutation résonant (16, Qz) correspond à une période de temps allant jusqu'au moment où un courant circulant à travers la bobine de réactance (18) du circuit filtrant diminue pour être égal ou inférieur à une valeur prédéfinie, et où la tension à travers le condensateur (19) du circuit filtrant augmente pour être supérieure ou égale à une valeur prédéfinie.

3. Appareil d'alimentation en courant continu selon la revendication 1 ou 2,
dans lequel le nombre prédéfini de fois où le moyen de commande est agencé de manière à placer un ou plusieurs éléments parmi les éléments de commutation (Q1 à Q4) et l'élément de commutation résonant (16, Qz) à l'état de marche, est déterminé sur la base de la tension de la source de tension continue (10) et des constantes du circuit filtrant et du circuit résonant (21).

4. Appareil d'alimentation en courant continu selon la revendication 1 ou 2,
dans lequel le nombre prédéfini de fois où le moyen de commande est agencé de manière à placer un ou plusieurs éléments parmi les éléments de commutation (Q1 à Q4) et l'élément de commutation résonant (16, Qz) à l'état de marche, est déterminé de sorte qu'un courant circulant à travers la bobine de réactance (18) du circuit filtrant devient égal ou inférieur à la valeur de courant maximale du courant résonant induit par le circuit résonant (21).

5. Appareil d'alimentation en courant continu selon l'une quelconque des revendications 1 à 4,
dans lequel le dispositif de commande (24) est agencé de manière à mémoriser la polarité de la dernière tension de sortie, lorsqu'un ou plusieurs éléments parmi les éléments de commutation (Q1 à Q4) et l'élément de commutation résonant (16, Qz) sont placés à l'état de marche le nombre prédéfini de fois, et, lorsqu'un ou plusieurs éléments parmi les éléments de commutation (Q1 à Q4) et l'élément de commutation résonant (16, Qz) sont à nouveau placés à l'état de marche après l'écoulement de la période de temps prédéfinie, le dispositif de commande (24) est agencé de manière à fournir en sortie la première tension de sortie avec une polarité opposée à la polarité mémorisée de la dernière tension de sortie.

6. Procédé de commande d'un appareil d'alimentation en courant continu qui inclut :

une source de tension continue (10) ;
un circuit primaire (13) destiné à convertir la puissance en courant continu de la source de tension continue (10) en une puissance en courant alternatif, en utilisant les opérations d'éléments de commutation (Q1 à Q4) ;
un transformateur (14) destiné à introduire la puissance en courant alternatif fournie en sortie par le circuit primaire (13) ;
un circuit secondaire (15) destiné à convertir la puissance en courant alternatif fournie en sortie par le transformateur (14) en une puissance en courant continu ;

un circuit résonant (21) qui est couplé, en parallèle, au côté de sortie de courant continu du circuit secondaire (15), et qui inclut un circuit en série d'un élément de commutation résonant (16, Qz) et d'un condensateur résonant (17);

un circuit filtrant qui inclut une bobine de réactance (18) et un condensateur (19), et qui lisse la puissance en courant continu fournie en sortie par le circuit secondaire (15) ; et

un dispositif de commande (24) qui commande les états de marche/arrêt des éléments de commutation (Q1 à Q4) du circuit primaire (13) ;

**caractérisé en ce que** :

lorsque la tension à travers le condensateur (19) du circuit filtrant est égale ou inférieure à une valeur de tension prédéfinie, le procédé de commande comprend les étapes ci-dessous consistant à :

maintenir un ou plusieurs éléments parmi les éléments de commutation (Q1 à Q4) et l'élément de commutation résonant (16, Qz) à l'état de marche, un nombre prédéfini de fois, de sorte qu'un courant circulant à travers la bobine de réactance (18) du circuit filtrant devient égal ou inférieur à la valeur de courant maximale du courant résonant induit par l'élément résonant ; et

maintenir subséquemment tous les éléments de commutation (Q1 à Q4) et l'élément de commutation résonant (16, Qz) à l'état d'arrêt au cours d'une période de temps prédéfinie, dans lequel la période de temps prédéfinie est au moins aussi longue que le cycle résonant de l'élément de commutation résonant.

FIG.1

# FIG.2

EP 2 717 451 B1

# FIG.3

EP 2 717 451 B1

# F I G . 4

108

201a COMPARISON COMPUTING UNIT

CINT_FLG INTERMITTENT OPERATION CONDITION FULFILLMENT FLAG

Vd

Vd* Vd_CINT_BS INTERMITTENT OPERATION REFERENCE VOLTAGE

201b COMPARISON COMPUTING UNIT

DNCHG_FLG CHARGING INCOMPLETION FLAG

202 PULSE THINNING-OUT NUMBER COMPUTING UNIT

PINT_FLG PULSE THINNING-OUT CONDITION FULFILLMENT FLAG

Vd_PINT_LV PULSE THINNING-OUT OPERATION VOLTAGE

E

203 POFF_FLG PULSE-OFF SIGNAL

# FIG.5

# FIG.6

# FIG.7

F I G . 8

# FIG.9

# FIG.10

EP 2 717 451 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI41992368464 B
- JP 2009296763 A
- JP 2004159473 A
- EP 2495859 A